# EUROPÄISCHE PATENTSCHRIFT

(11) **EP 3 390 110 B1**
(45) Veröffentlichungstag und Bekanntmachung des Hinweises auf die Patenterteilung: **18.03.2020**
(21) Anmeldenummer: 16767310.2
(22) Anmeldetag: 21.09.2016
(51) Int. Cl.: B60C 11/13, B60C 11/03

(54) **FAHRZEUGLUFTREIFEN**
PNEUMATIC VEHICLE TYRES
PNEUMATIQUE DE VÉHICULE

(30) Priorität: 16.12.2015 DE 102015225417
(43) Veröffentlichungstag der Anmeldung: 24.10.2018
(73) Patentinhaber: Continental Reifen Deutschland GmbH, 30165 Hannover (DE)
(72) Erfinder: YEO, Chun Yi, 30627 Hannover (DE); HÄRTWIG, Andreas, 30419 Hannover (DE); KRISTEN, Florian, 30171 Hannover (DE)
(74) Vertreter: Finger, Karsten
(86) Internationale Anmeldenummer: PCT/EP2016/072398
(87) Internationale Veröffentlichungsnummer: WO 2017/102119

(56) Entgegenhaltungen:
- FR-A1- 3 011 512
- Hamiza ET AL: "tractor-tire-tread", https://www.dreamstime.com/royalty-free-st ock-photography-tractor-tire-tread-backgro und-image28489567, 24. Januar 2014 (2014-01-24), XP55321190, Gefunden im Internet: URL:https://thumbs.dreamstime.com/z/tracto r-tire-tread-background-28489567.jpg [gefunden am 2016-11-21]

## Beschreibung

Die Erfindung betrifft einen Fahrzeugluftreifen, insbesondere einen Nutzfahrzeugreifen, mit einem Laufstreifen mit Profilpositiven, welche in Umfangsrichtung voneinander durch Querrillen getrennt sind, die vom zentralen Bereich des Laufstreifens jeweils bis zu den seitlichen Laufstreifenrändern durchgehend verlaufen und die Hauptrillen des Laufstreifens sind und zumindest über den Großteil ihres Verlaufes die maximal vorgesehene Profiltiefe aufweisen, wobei der Laufstreifen als Profilpositive zwei in Umfangsrichtung umlaufende Reihen von Querrippen aufweist, welche voneinander jeweils durch Querrillen getrennt sind, und laufrichtungsgebunden ausgeführt ist, wobei die Querrippen der einen Reihe und somit die zwischen ihnen verlaufenden Querrillen bezüglich der axialen Richtung gegensinnig zu den Querrippen und Querrillen der anderen Reihe verlaufen, wobei die Querrillen in einem zentralen Bereich des Laufstreifens befindliche Endabschnitte aufweisen, wobei die Endabschnitte der Querrillen und die im zentralen Bereich befindlichen Querrippenbereiche der einen Reihe mit den Endabschnitten der Querrillen und den im zentralen Bereich befindlichen Querrippenbereichen der anderen Reihe in Umfangsrichtung überlappen, und wobei in den Endabschnitten der Querrillen jeweils eine an die Rillenflanken der Endabschnitte angebundene Grunderhebung ausgebildet ist.

Fahrzeugluftreifen mit einem Laufstreifen, bei welchen Querrillen die Hauptrillen sind, werden insbesondere bei Nutzfahrzeugen verwendet, die auf steinigem oder schottrigem Untergrund gefahren werden, beispielsweise im Baustelleneinsatz. Bei solchen Laufstreifen ist es besonders wichtig, dafür zu sorgen, dass sich Steine in den Hauptrillen nicht verfangen, da sie Schnittverletzungen im Laufstreifengummi verursachen können, die den Reifen bis in den Bereich des Gürtels beschädigen können und in der Folge unbrauchbar machen. Es ist daher bekannt, am Rillengrund der Hauptrillen Grunderhebungen auszubilden, die für ein wirkungsvolles Auswerfen der Steine sorgen und ein Verfangen von Steinen verhindern. Die bekannten Grunderhebungen am Rillengrund sind relativ klein dimensioniert und eng beabstandet ausgebildet, sodass in jeder Querrille eine Vielzahl solcher Erhebungen vorgesehen ist.

Ein Fahrzeugluftreifen der eingangs genannten Art ist beispielsweise aus der FR 3011 512 A1 bekannt. Der Laufstreifen dieses Fahrzeugluftreifens weist daher zwei Reihen von Querrippen auf, welche durch Querrillen voneinander getrennt sind, wobei in den Endabschnitten der Querrillen jeweils eine an die Rillenflanken der Endabschnitte angebundene Grundanhebung ausgebildet ist. Die Grundanhebung ist als Rampe ausgeführt und daher in radialer Richtung von einer Schrägfläche begrenzt.

Aus der US 5,975,172 A ist ein Fahrzeugluftreifen mit zwei im mittleren Bereich des Laufstreifens in Umfangsrichtung umlaufenden Profilblockreihen vorgesehen, welche voneinander durch eine Umfangsrille getrennt sind. Am Rillengrund der Umfangsrille ist eine Vielzahl von in Umfangsrichtung aneinandergereihten und im Querschnitt rechteckigen Vorsprüngen ausgebildet. Diese Vorsprünge sollen ein Steineverfangen verhindern bzw. das Auswerfen von eingefangenen Steinen begünstigen. Diesen Zweck sollen auch die Vorsprünge am Rillengrund der Rillen des aus der US 6,000,451 A bekannten Laufstreifens eines Fahrzeugluftreifens erfüllen. Der Laufstreifen ist in Profilblöcke gegliedert, wobei im Zentralbereich des Laufstreifens Profilblöcke angeordnet sind, welche von Rillen umlaufen sind, auf deren Rillengrund unterschiedlich dimensionierte Vorsprünge ausgebildet sind.

Es ist bekannt, dass der mittlere Bereich des Laufstreifens besonders anfällig für ein Verfangen von Steinen ist und für das Auftreten des Cut-und Chip-Effektes - das Entstehen von Einrissen am Rillengrund und in Folge der Einrisse von Ausbrüchen oder Abblätterungen von Gummimaterial. Die bislang bekannten Laufstreifen mit Grunderhebungen am Rillengrund können diesbezüglich keine optimale Lösung bieten. Der Erfindung liegt daher die Aufgabe zugrunde, einen Fahrzeugluftreifen in dieser Hinsicht zu verbessern.

Gelöst wird die gestellte Aufgabe erfindungsgemäß dadurch, dass die Grundanhebung vom Niveau des Rillengrundes ermittelt eine Höhe von 40% bis 60% der Rillentiefe und an ihrer Basis eine Erstreckungslänge von 30 mm bis 50 mm aufweist.

Durch die der Erfindung zugrunde liegende Idee, in den Überlappungsbereichen der Querrillen im zentralen Bereich des Laufstreifens Grunderhebungen auszubilden, die relativ großvolumig sind und ein große Erstreckung entlang der Endabschnitte der Querrillen aufweisen, wird einerseits im mittleren Bereich des Laufstreifens das Steineverfangen erschwert und andererseits die Profilsteifigkeit in diesem Bereich etwas erhöht, wodurch das Auftreten des Cut-und Chip-Effekt weitgehend verhindert wird.

Für einen optimalen Steifigkeitsverlauf von der Laufstreifenmitte in Richtung Schultern ist es ferner vorteilhaft, wenn die Grunderhebungen in den Endabschnitten der Querrillen an ihren den Querrillenenden abgewandten Endbereichen jeweils als eine in Richtung Rillengrund der Querrille abfallende Rampe ausgebildet sind, wobei die Rampenoberfläche unter einem Winkel von 35° bis 55° zum Rillengrund verläuft.

Besonders vorteilhaft ist weiter eine Ausführung der Erfindung, bei welcher die Überlappungsbreite der Endabschnitte der Querrillen 15% bis 30% der Bodenaufstandsflächenbreite des Laufstreifens beträgt, sodass die Grunderhebungen in diesen Überlappungsbereichen mit relative großer Erstreckungslänge ausbildet werden können.

Bei einer weiteren Ausgestaltung der Erfindung ist am Rillengrund der Querrillen, sich über den gesamten Verlauf der Querrillen erstreckend, eine Reihe weiterer Grunderhebungen ausgebildet ist, welche an die Rillenflanken der Querrillen angebunden sind und welche derart ausgebildet sind, dass ihr Gummivolumen umso geringer ist je näher sie beim Laufstreifenrand positioniert sind. Durch diese Maßnahme wird ein "Wegtragen" etwaiger in die Querrillen eindringender Steine aus dem mittleren Bereich des Laufstreifens zur Seite, zu den Laufstreifenrändern, unterstützt.

Besonders vorteilhaft und bevorzugt ist eine Ausführung, bei der das Gummivolumen der in einer Querrille aneinandergereihten Grunderhebungen von Grunderhebung zu Grunderhebung schrittweise geringer wird. Bei einer möglichen Ausführungsvariante der Erfindung kann die Änderung der Gummivolumina damit einhergehen, dass die Erstreckungslängen der in einer Querrille aneinandergereihten Grunderhebungen umso geringer ist, je näher sie beim Laufstreifenrand positioniert sind, wobei vorzugsweise die Erstreckungslängen von Grunderhebung zu Grunderhebung schrittweise geringer werden. Alternativ oder zusätzlich können auch die Höhen der Grunderhebungen variiert werden. Bei einer bevorzugten Ausführung der Erfindung ist diesbezüglich die vom Niveau des Rillengrundes ermittelte Höhe zumindest bei einer der im mittleren Bereich oder bei der im zentralen Bereich des Laufstreifens positionierten Grunderhebung größer als die Höhe zumindest einer näher beim oder beim Laufstreifenrand positionierten Grunderhebung. Die Steifigkeit des Laufstreifens ist somit im mittleren Bereich größer als in den seitlichen Bereichen des Laufstreifens, wobei durch die Abnahme der Gummivolumina der Grunderhebungen eine weitgehend gleichmäßige Abnahme der Steifigkeit von der Mitte in Richtung zu den Schulterbereichen gewährleistet ist. Auf diese Weise werden im heiklen mittleren Bereich des Laufstreifens das Verfangen von Steinen erschwert, der Weitertranspost zu den Schultern unterstützt und eine gute Traktion sichergestellt.

Bevorzugt weisen zumindest jene drei Grunderhebungen, welche in einer Querrille an den Laufstreifenrand anschließend aneinandergereiht sind, eine Höhe von 5% bis 20% der Rillentiefe an ihrer jeweiligen Position auf.

Weitere Merkmale, Vorteile und Einzelheiten der Erfindung werden nun anhand der Zeichnung, die ein Ausführungsbeispiel darstellt, näher beschrieben.

Dabei zeigen
Fig. 1 eine Draufsicht auf einen Umfangsabschnitt eines Laufstreifens eines erfindungsgemäßen Fahrzeugluftreifens,
Fig. 2 eine Schnittdarstellung entlang der Linie II-II der Fig. 1 und
Fig. 3 und Fig. 4 Querschnitte entlang der Linien III-III bzw. IV-IV der Fig. 1.

Die Erfindung befasst sich mit einer besonderen Ausgestaltung eines Laufstreifens 1 eines Fahrzeugluftreifens, insbesondere eines Nutzfahrzeugreifens oder eines Reifens für Light-Trucks, in Radialbauart. Erfindungsgemäß ausgeführte Fahrzeugluftreifen sind insbesondere für den Einsatz auf schottrigem oder steinigem Untergrund, beispielsweise auf Baustellen oder offroad vorgesehen und geeignet.

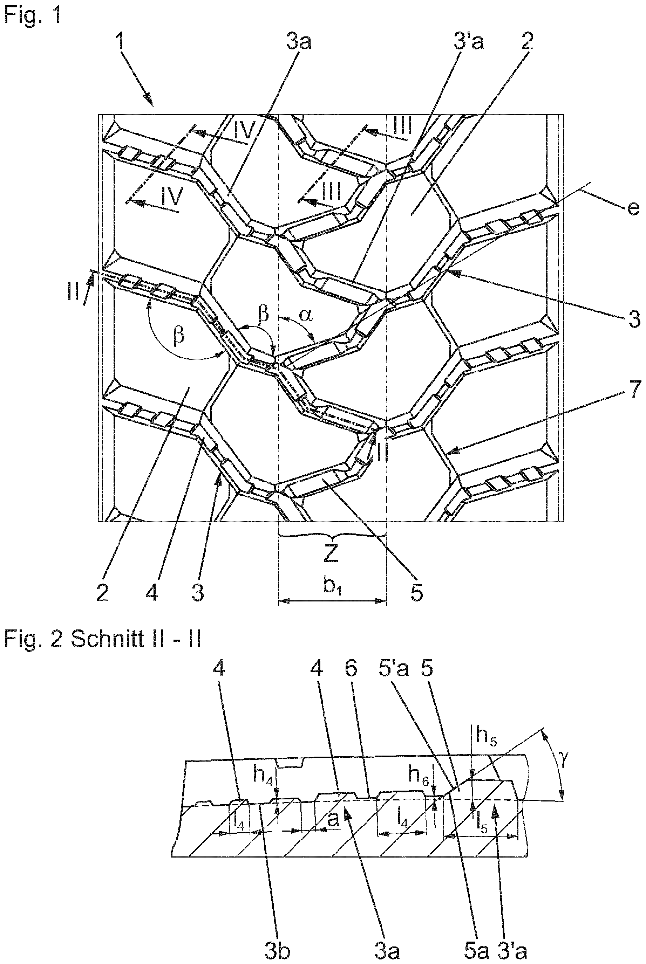

Der in Fig. 1 gezeigte Laufstreifen 1 wird von zwei in Umfangsrichtung verlaufenden Reihen aus Querrippen 2 dominiert, wobei in jeder Reihe die Querrippen 2 voneinander durch Querrillen 3 getrennt sind, welche die Hauptrillen des Laufstreifens 1 sind und zumindest über den Großteil ihres Verlaufes die für den betreffenden Reifen vorgesehene maximale Profiltiefe von beispielsweise 15 mm bis 25 mm bei Nutzfahrzeugreifen aufweisen. Unter Querrillen 3 werden im Rahmen der gegenständlichen Erfindung ferner Rillen verstanden, welche sich unter einem Winkel α ≤ 45° zur axialen Richtung erstrecken. Die Erstreckungsrichtung einer dieser Querrillen 3 ist in Fig. 1 durch eine gerade Linie e verdeutlicht. Bei der in Fig. 1 gezeigten Ausführung handelt es sich ferner um einen laufrichtungsgebunden ausgeführten Laufstreifen 1, bei welchem die Querrippen 2 der einen Reihe und damit auch die zwischen ihnen verlaufenden Querrillen 3 bezüglich der axialen Richtung gegensinnig zu den Querrippen 2 und Querrillen 3 der anderen Reihe verlaufen. Ein Fahrzeugluftreifen mit einem solchen Laufstreifen ist derart am Fahrzeug zu montieren, dass bei Vorwärtsfahrt die laufstreifeninnenseitigen Enden der Querrillen 3 zuerst in den Untergrund eintreten. Relativ schmale und seichte, insbesondere 3 mm bis 7 mm tiefe Umfangsrillen 7 bewirken bei neuem Reifen eine Gliederung jeder Querrippe 2 in zwei Blöcke.

Im zentralen Bereich Z des Laufstreifens überlappen die Querrippen 2 und die Querrillen 3 der einen Reihe mit Querrippen 2 und den Querrillen 3 der anderen Reihe, die Breite des Bereiches Z und somit die Überlappungsbreite b₁ betragen in der Größenordnung von 15% bis 30% der Bodenaufstandsflächenbreite des Laufstreifens 1. Die Querrillen 3 und die Querrippen 2 der einen Reihe sind somit gegenüber den Querrippen 2 und den Querrillen 3 der anderen Reihe in Umfangsrichtung versetzt, wobei die laufstreifeninnenseitigen Endabschnitte der Querrillen 3 der einen Reihe in die laufstreifeninnenseitigen Endabschnitte der Querrillen 3 der anderen Reihe einmünden.

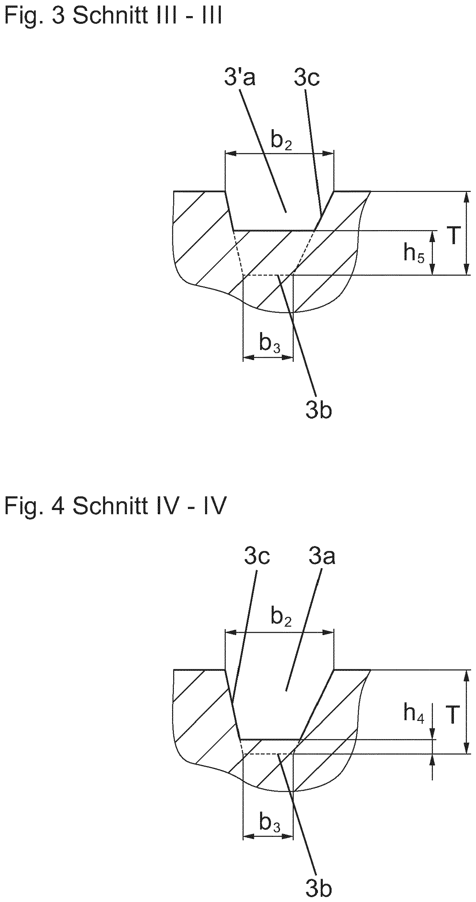

Jede Querrille 3 setzt sich aus mehreren, bei der gezeigten Ausführung aus fünf, zueinander in Zickzackform verlaufenden Rillenabschnitten 3a, 3'a, einem am Weitesten laufstreifeninnenseitig im zentralen Bereich Z befindlichen zentralen Rillenabschnitt 3'a und vier weiteren Rillenabschnitten 3a zusammen. Die einzelnen Rillenabschnitte 3a, 3'a schließen miteinander stumpfe Winkel β ein, welche 115° bis 155° betragen. Die Anzahl der zickzackförmig verlaufenden Rillenabschnitte 3a, 3a', die vorzugsweise unterschiedliche Erstreckungslängen aufweisen, kann drei bis sieben betragen. Es ist grundsätzlich auch möglich, dass sich die Querrillen 3 zumindest weitgehend geradlinig erstrecken. Wie den Schnittdarstellungen in Fig. 3 und Fig. 4 zu entnehmen ist, weisen die Querrillen 3 einen der üblichen Rillenquerschnitte mit im Wesentlichen V-förmig verlaufenden Rillenflanken 3c auf, wobei die Rillenöffnung zur Laufstreifenaußenseite hin breiter wird. Bei Nutzfahrzeugreifen beträgt die Breite b₂ der Querrillen 3 an der K Laufstreifenaußenfläche 12 mm bis 22 mm, wobei im zentralen Bereich Z des Laufstreifens die Breite b₂ am geringsten ist und Richtung Laufstreifenrand größer wird. Die Querrillen 3 weisen ferner in den Rillenabschnitten 3a, 3'a einen Rillengrund 3b auf, dessen Breite b₃ in allen Rillenabschnitten 3a, 3'a insbesondere konstant und gleich groß ist und bei Nutzfahrzeugreifen in der Größenordnung von 3 mm bis 5 mm, vorzugsweise 4 mm, beträgt.

Entlang des Rillengrundes 3b ist eine Anzahl von unter gegenseitigen Abständen aneinander gereihten Grunderhebungen 4, 5 ausgebildet, die im Längsschnitt, wie es Fig. 2 zeigt, im Wesentlichen trapezförmig sind und im Querschnitt, wie es Fig. 3 und Fig. 4 zeigen, an die Rillenflanken 3c angebunden sind. Die Grunderhebungen 4 weisen an ihrer Basis gegenseitige Abstände a von 8 mm bis 13 mm auf, wobei die Abstände a im Wesentlichen gleich groß oder unterschiedlich sein können. In dem am Weitesten laufstreifeninnenseitig befindlichen zentralen Rillenabschnitt 3'a befindet sich die Grunderhebung 5, welche die größte Erstreckungslänge l₅ und die größte Höhe h₅ von allen Grunderhebungen aufweist. Der Grunderhebung 5 besitzt daher auch das größte Gummivolumen. Das Gummivolumen der Richtung Laufstreifenrand entlang des Rillengrundes 3b ausgebildeten Grunderhebungen 4 nimmt von Grunderhebung 4 zu Grunderhebung 4 schrittweise ab. Das kleinste Gummivolumen weist daher die unmittelbar beim Laufstreifenrand am Rillengrund 3b angeordnete Grunderhebung 4 auf.

Die Grunderhebungen 4 weisen an ihrer Basis unterschiedliche Erstreckungslängen l₄ auf, welche mit zunehmender Entfernung vom zentralen Bereich Z abnehmen, wobei jede Grunderhebung 4 um 10% bis 30% kürzer ist als die ihr benachbarte, weiter laufstreifeninnenseitig positionierte Grunderhebung 4 bzw. 5. Verläuft eine Grunderhebung 4 über eine Knickstelle zwischen aufeinander folgenden Rillenabschnitten 3a, so ist ihre Erstreckungslänge die Summe der Längen ihrer Abschnitte.

Bei der gezeigten Ausführungsform ist ferner die im zentralen Bereich Z positionierte Grunderhebung 5 mit der an sie anschließenden Grunderhebung 4 sowie diese mit der an sie anschließenden Grunderhebung 4 durch am Rillengrund 3b ausgebildete stegartige flache Erhebungen 6 verbunden. Die Erhebungen 6 weisen gegenüber ihrer Basis am Rillengrund 3b eine Höhe h₆ von 0,5 mm bis 1,5 mm auf. Es ist möglich, zwischen beliebigen Grunderhebungen flache Erhebungen 6 vorzusehen oder überhaupt keine.

Die Richtung Laufstreifenrand geringer werdenden Gummivolumina der Grunderhebungen 4 sind vorzugsweise auch, abgesehen von der schrittweise geringer werdenden Erstreckungslänge l₄, l₅ der Grunderhebungen 4, 5, durch geringer werdende Höhen h₄, h₅ der Grunderhebungen 4, 5 bedingt. Die Höhe h₅ der am weitesten laufstreifeninnenseitig ausgebildeten Grunderhebung 5 beträgt 40% bis 60% der Rillentiefe T. Die Höhen h₄ der an die Grunderhebung 5 anschließenden Grunderhebungen 4 beträgt 5% bis 20% der Rillentiefe T. Bei der gezeigten Ausführung weisen die beiden auf die Grunderhebung 5 folgenden Grunderhebungen 4 gleiche Höhen h₄ auf, ebenso die drei an diese anschließenden Grunderhebungen 4, wobei deren Höhen h₄ geringer sind. Bei alternativen Ausführungsformen sind die Grunderhebungen 4 entweder derart ausgeführt, dass ihre Höhen schrittweise umso geringer werden, je näher sie beim Laufstreifenrand positioniert sind oder derart ausgeführt, dass sie sämtlich gleiche Höhen aufweisen.

Die im zentralen Bereich Z des Laufstreifens 1 und im am weitesten laufstreifeninnenseitig befindlichen Rillenabschnitt 3'a angeordnete Grunderhebung 5 besitzt, wie erwähnt, das größte Gummivolumen von allen Grunderhebungen, ihr Gummivolumen beträgt zumindest das Fünffache des Gummivolumens der ihr benachbarten Grunderhebung 4. Der der benachbarten Grunderhebung 4 zugewandte Endabschnitt der Grunderhebung 5 ist als eine in Richtung dieser Grunderhebung 4 abfallende Rampe 5a ausgebildet, wobei die Rampenoberfläche 5'a unter einem Winkel γ von 35° bis 55° zur Ebene des Rillengrundes 3b verläuft.

Die Dimensionierung der Grunderhebungen 4, 5 wird in den jeweiligen Reifengrößen in Abhängigkeit von der Profiltiefe angepasst, welche beispielsweise bei Nutzfahrzeugreifen 15 mm bis 25 mm beträgt.

### Bezugsziffernliste

- 1 ....................: Laufstreifen
- 2 ....................: Querrippe
- 3 ....................: Querrille
- 3a, 3'a...............: Rillenabschnitt
- 3b ....................: Rillengrund
- 3c ....................: Rillenflanke
- 4, 5 ...................: Grunderhebung
- 5a ....................: Rampe
- 5'a ....................: Rampenfläche
- 6 ....................: Erhebung
- 7 ....................: Umfangsrille
- b₁, b₂, b₃............: Breite
- e ....................: Linie
- l₄, l₅...................: Erstreckungslänge
- α, β, γ ..............: Winkel
- a ....................: Abstand
- h₄, h₅, h₆............: Höhe
- Z ....................: zentraler Bereich

## Patentansprüche

1. Fahrzeugluftreifen, insbesondere Nutzfahrzeugreifen, mit einem Laufstreifen mit Profilpositiven, welche in Umfangsrichtung voneinander durch Querrillen (3) getrennt sind, die vom zentralen Bereich des Laufstreifens jeweils bis zu den seitlichen Laufstreifenrändern durchgehend verlaufen und die Hauptrillen des Laufstreifens sind und zumindest über den Großteil ihres Verlaufes die maximal vorgesehene Profiltiefe aufweisen, wobei der Laufstreifen als Profilpositive zwei in Umfangsrichtung umlaufende Reihen von Querrippen (2) aufweist, welche voneinander jeweils durch Querrillen (3) getrennt sind, und laufrichtungsgebunden ausgeführt ist, wobei die Querrippen (2) der einen Reihe und somit die zwischen ihnen verlaufenden Querrillen (3) bezüglich der axialen Richtung gegensinnig zu den Querrippen (2) und Querrillen (3) der anderen Reihe verlaufen, wobei die Querrillen (3) in einem zentralen Bereich (Z) des Laufstreifens (1) befindliche Endabschnitte (3'a) aufweisen, wobei die Endabschnitte (3'a) der Querrillen (3) und die im zentralen Bereich befindlichen Querrippenbereiche der einen Reihe mit den Endabschnitten (3'a) der Querrillen (3) und den im zentralen Bereich befindlichen Querrippenbereichen der anderen Reihe in Umfangsrichtung überlappen, und wobei in den Endabschnitten (3'a) der Querrillen (3) jeweils eine an die Rillenflanken (3c) der Endabschnitte (3'a) angebundene Grunderhebung (5) ausgebildet ist,
**dadurch gekennzeichnet,**
**dass** die Grundanhebung (5) vom Niveau des Rillengrundes (3b) ermittelt eine Höhe (h₅) von 40% bis 60% der Rillentiefe (T) und an ihrer Basis eine Erstreckungslänge (l₅) von 30 mm bis 50 mm aufweist.

2. Fahrzeugluftreifen nach Anspruch 1, **dadurch gekennzeichnet, dass** die Grunderhebungen (5) an ihren den Querrillenenden abgewandten Endbereichen jeweils als eine in Richtung Rillengrund (3b) der Querrille (3) abfallende Rampe (5a) ausgebildet sind, wobei die Rampenoberfläche (5'a) unter einem Winkel (γ) von 35° bis 55° zum Rillengrund (3b) verläuft.

3. Fahrzeugluftreifen nach Anspruch 1 oder 2, **dadurch gekennzeichnet, dass** die Überlappungsbreite (b₁) der Endabschnitte der Querrillen (3) 15% bis 30% der Bodenaufstandsflächenbreite des Laufstreifens (1) beträgt.

4. Fahrzeugluftreifen nach einem der Ansprüche 1 bis 3, **dadurch gekennzeichnet, dass** am Rillengrund (3b) der Querrillen (3), sich über den gesamten Verlauf der Querrillen (3) erstreckend, eine Reihe weiterer Grunderhebungen (4) ausgebildet ist, welche an die Rillenflanken (3c) der Querrillen (3) angebunden sind und welche derart ausgebildet sind, dass ihr Gummivolumen umso geringer ist je näher sie beim Laufstreifenrand positioniert sind.

5. Fahrzeugluftreifen nach einem der Ansprüche 1 bis 4, **dadurch gekennzeichnet, dass** das Gummivolumen sämtlicher in einer Querrille (3) aneinandergereihten Grunderhebungen (4, 5) von Grunderhebung (4, 5) zu Grunderhebung (4, 5) schrittweise geringer ist.

6. Fahrzeugluftreifen nach einem der Ansprüche 1 bis 5, **dadurch gekennzeichnet, dass** die Erstreckungslängen (l₄, l₅) sämtlicher in einer Querrille (3) aneinandergereihten Grunderhebungen (4, 5) umso geringer ist, je näher sie beim Laufstreifenrand positioniert sind.

7. Fahrzeugluftreifen nach einem der Ansprüche 1 bis 6, **dadurch gekennzeichnet, dass** die Erstreckungslängen (l₄, l₅) sämtlicher in einer Querrille (3) aneinandergereihten Grunderhebungen (4, 5) Richtung Laufstreifenrand von Grunderhebung (4, 5) zu Grunderhebung (4, 5) schrittweise geringer ist.

8. Fahrzeugluftreifen nach einem der Ansprüche 1 bis 7, **dadurch gekennzeichnet, dass** die vom Niveau des Rillengrundes (3b) ermittelte Höhe (h₄, h₅) zumindest einer der im mittleren Bereich oder der im zentralen Bereich des Laufstreifens positionierten Grunderhebung (4, 5) größer ist als die Höhe (h₄) zumindest einer näher beim oder beim Laufstreifenrand positionierten Grunderhebung (4).

9. Fahrzeugluftreifen nach einem der Ansprüche 1 bis 8, **dadurch gekennzeichnet, dass** zumindest jene drei Grunderhebungen (4), welche in einer Querrille (3) an den Laufstreifenrand anschließend aneinandergereiht sind, eine Höhe (h₄) von 5% bis 20% der Rillentiefe (T) an ihrer jeweiligen Position aufweisen.

## Claims

1. Pneumatic vehicle tire, in particular utility vehicle tire, having a tread with profile positives which are separated from one another in a circumferential direction by transverse channels (3) which extend continuously from the central region of the tread in each case as far as the lateral tread edges and which are main channels of the tread and which, at least over the major part of the course thereof, have the maximum provided profile depth, wherein the tread has, as profile positives, two rows of transverse ribs (2) which are of encircling form in the circumferential direction and which are separated from one another in each case by transverse channels (3), and the tread is of directional design, wherein the transverse ribs (2) of one row, and thus the transverse channels (3) running between said transverse ribs, run, with respect to the axial direction, oppositely in relation to the transverse ribs (2) and transverse channels (3) of the other row, wherein the transverse channels (3) have end sections (3'a) situated in a central region (Z) of the tread (1), wherein the end sections (3'a) of the transverse channels (3) and the transverse rib regions, situated in the central region, of one row overlap in the circumferential direction with the end sections (3'a) of the transverse channels (3) and the transverse rib regions, situated in the central region, of the other row, and wherein, in the end sections (3'a) of the transverse channels (3), there is formed in each case one base elevation (5) which is attached to the channel flanks (3c) of the end sections (3'a),
**characterized**
**in that** the base elevation (5), determined from the level of the channel base (3b), has a height (h₅) of 40% to 60% of the channel depth (T) and, at its base, has an extent length (l₅) of 30 mm to 50 mm.

2. Pneumatic vehicle tire according to Claim 1, **characterized in that** the base elevations (5) are formed, at their end regions averted from the transverse channel ends, in each case as a ramp (5a) which slopes downward in the direction of the channel base (3b) of the transverse channel (3), wherein the ramp surface (5'a) runs at an angle (γ) of 35° to 55° with respect to the channel base (3b).

3. Pneumatic vehicle tire according to Claim 1 or 2, **characterized in that** the overlap width (b₁) of the end sections of the transverse channels (3) amounts to 15% to 30% of the ground contact patch width of the tread (1).

4. Pneumatic vehicle tire according to one of Claims 1 to 3, **characterized in that**, on the channel base (3b) of the transverse channels (3), a row of further base elevations (4) is formed so as to extend over the entire course of the transverse channels (3), which further base elevations are attached to the channel flanks (3c) of the transverse channels (3) and are designed such that their rubber volume becomes smaller the closer to the tread edge they are positioned.

5. Pneumatic vehicle tire according to one of Claims 1 to 4, **characterized in that** the rubber volume of all of the base elevations (4, 5) lined up together in one transverse channel (3) becomes smaller in stepped fashion from base elevation (4, 5) to base elevation (4, 5).

6. Pneumatic vehicle tire according to one of Claims 1 to 5, **characterized in that** the extent lengths (l₄, l₅) of all of the base elevations (4, 5) lined up together in one transverse channel (3) becomes smaller the closer to the tread edge they are positioned.

7. Pneumatic vehicle tire according to one of Claims 1 to 6, **characterized in that** the extent lengths (l₄, l₅) of all of the base elevations (4, 5) lined up together in one transverse channel (3) become smaller in stepped fashion from base elevation (4, 5) to base elevation (4, 5) in the direction of the tread edge.

8. Pneumatic vehicle tire according to one of Claims 1 to 7, **characterized in that** the height (h₄, h₅), determined from the level of the channel base (3b), of at least one base elevation (4, 5) positioned in the middle region or in the central region of the tread is greater than the height (h₄) of at least one base elevation (4) positioned closer to or at the tread edge.

9. Pneumatic vehicle tire according to one of Claims 1 to 8, **characterized in that** at least those three base elevations (4) which are lined up together in one transverse channel (3) adjacent to the tread edge have a height (h₄) of 5% to 20% of the channel depth (T) at their respective position.

## Revendications

1. Pneumatique de véhicule, en particulier pneumatique de véhicule utilitaire, ledit pneumatique comprenant une bande de roulement pourvue de profilés en relief qui sont séparés les uns des autres dans la direction circonférentielle par des rainures transversales (3) qui s'étendent chacune en continu de la région centrale de la bande de roulement jusqu'aux bords latéraux de la bande de roulement et qui constituent les rainures principales de la bande de roulement et ont au moins sur la plus grande partie de leur étendue la profondeur de profilé maximale prévue, la bande de roulement comportant comme profilés en relief deux rangées de nervures transversales (2), qui s'étendent circulairement dans la direction circonférentielle et qui sont séparées l'une de l'autre par des rainures transversales (3), et étant liée à la direction de roulement, les nervures transversales (2) d'une rangée et donc les rainures transversales (3) qui s'étendent entre elles s'étendant à l'opposé des nervures transversales (2) et des rainures transversales (3) de l'autre rangée par rapport à la direction axiale, les rainures transversales (3) comportant des portions d'extrémité (3'a) situées dans une région centrale (Z) de la bande de roulement (1), les portions d'extrémité (3'a) des rainures transversales (3) et les régions de nervures transversales d'une rangée, lesquelles régions sont situées dans la région centrale, se chevauchant dans la direction circonférentielle avec les portions d'extrémité (3'a) des rainures transversales (3) et les zones de nervures transversales de l'autre rangée qui sont situées dans la région centrale, et une élévation de base (5), reliée aux flancs de rainure (3c) des portions d'extrémité (3'a) étant formée dans chacune des portions d'extrémité (3'a) des rainures transversales (3),
**caractérisé en ce que**
l'élévation de base (5), déterminée à partir du niveau de la base de rainure (3b), a une hauteur (h₅) de 40 % à 60 % de la profondeur de rainure (T) et une longueur d'extension (l₅) de 30 mm à 50 mm au niveau de sa base.

2. Pneumatique de véhicule selon la revendication 1, **caractérisé en ce que** les élévations de base (5) sont chacune conçues, au niveau de leurs régions d'extrémité opposées aux extrémités de rainure transversale, comme une rampe (5a) inclinée en direction de la base de rainure (3b) de la rainure transversale (3), la surface de rampe (5'a) s'étendant suivant un angle (γ) de 35° à 55° par rapport à la base de rainure (3b).

3. Pneumatique de véhicule selon la revendication 1 ou 2, **caractérisé en ce que** la largeur de chevauchement (b₁) des portions d'extrémité des rainures transversales (3) est de 15 % à 30 % de la largeur de l'aire de contact au sol de la bande de roulement (1).

4. Pneumatique de véhicule selon l'une des revendications 1 à 3, **caractérisé en ce qu'**une rangée d'autres élévations (4) sont formées au niveau de la base de rainure (3b) des rainures transversales (3) en s'étendant sur toute l'étendue des rainures transversales (3) et sont reliées aux flancs de rainure (3c) des rainures transversales (3) et sont conçues de telle sorte que plus elles sont proches du bord de la bande de roulement, plus leur volume de caoutchouc est petit.

5. Pneumatique de véhicule selon l'une des revendications 1 à 4, **caractérisé en ce que** le volume de caoutchouc de toutes les élévations de base (4, 5) adjacentes dans une rainure transversale (3) devient de plus en plus petit depuis une élévation de base (4, 5) vers l'autre élévation de base (4, 5).

6. Pneumatique de véhicule selon l'une des revendications 1 à 5, **caractérisé en ce que** les longueurs d'extension (l₄, l₅) de toutes les élévations de base (4, 5) adjacentes dans une rainure transversale (3) sont d'autant plus petites qu'elles sont proches du bord de la bande de roulement.

7. Pneumatique de véhicule selon l'une des revendications 1 à 6, **caractérisé en ce que** les longueurs d'extension (l₄, l₅) de toutes les élévations de base (4, 5) adjacentes dans une rainure transversale (3) deviennent de plus en plus petites en direction du bord de la bande de roulement depuis une élévation de base (4, 5) vers l'autre élévation de base (4, 5).

8. Pneumatique de véhicule selon l'une des revendications 1 à 7, **caractérisé en ce que** la hauteur (h₄, h₅), déterminée à partir du niveau de la base de rainure (3b), d'au moins une élévation de base (4, 5) positionnée dans la région médiane ou dans la région centrale de la bande de roulement est supérieure à la hauteur (h₄) d'au moins une élévation de base (4) positionnée au plus près ou au niveau du bord de la bande de roulement.

9. Pneumatique de véhicule selon l'une des revendications 1 à 8, **caractérisé en ce qu'**au moins ces trois élévations de base (4), qui sont ensuite adjacentes au bord de la bande de roulement dans une rainure transversale (3), ont une hauteur (h₄) de 5 % à 20 % de la profondeur de rainure (T) à leur position respective.
